# EUROPÄISCHE PATENTSCHRIFT

(11) **EP 2 671 806 B1**
(45) Veröffentlichungstag und Bekanntmachung des Hinweises auf die Patenterteilung: **11.04.2018**
(21) Anmeldenummer: 13002287.4
(22) Anmeldetag: 30.04.2013
(51) Int. Cl.: B64G 1/40, G01N 23/10, G01T 1/20, G01F 17/00, G01N 23/06, G01F 23/288

(54) **Treibstofftank**
Fuel tank
Réservoir de carburant

(30) Priorität: 24.05.2012 DE 102012010628
(43) Veröffentlichungstag der Anmeldung: 11.12.2013
(73) Patentinhaber: ArianeGroup GmbH, 82024 Taufkirchen (DE)
(72) Erfinder: Rakers, Sven, 27321 Thedinghausen (DE)
(74) Vertreter: Marschall, Stefan

(56) Entgegenhaltungen:
- WO-A1-00/22387
- JP-A- H0 980 156
- US-A- 3 501 632
- US-A- 3 531 638
- US-A- 3 717 760
- US-A1- 2012 020 457

## Beschreibung

Die Erfindung betrifft einen Treibstofftank, insbesondere für Satelliten, zur Aufnahme von Treibstoffen mit einer flüssigen Phase.

Ein Satellit soll im Prinzip möglichst bis zum Ende seiner vorgesehenen Einsatzdauer manövrierfähig bleiben. Dies aber ist dann nicht mehr der Fall, wenn der Treibstoff vollständig aufgebraucht ist. Daher muss der Satellit kontrolliert außer Betrieb gesetzt werden, solange noch Treibstoff vorhanden ist. Bei Satelliten besteht jedoch das Problem, dass in einer späten operationellen Phase nicht mehr exakt erfasst werden kann, wieviel Treibstoff sich noch im Tank befindet, da Standardmethoden, wie das Wiegen in der Schwerelosigkeit, nicht funktionieren. Bei Treibstoffen mit einer flüssigen Phase kann zudem die Restmenge auch nicht über den Druck der Gasphase gemessen werden, da dieser nicht in Zusammenhang mit dem Volumen bzw. der Masse der flüssigen Phase steht. Schließlich kann der verbliebene Treibstoff auch nicht immer aus der Differenz zwischen ursprünglicher Betankung und dem im Verlauf des Betriebes des Satelliten abgeflossenem Treibstoff über eine Durchflussmessung ermittelt werden, da letztere mit der Zeit ebenfalls ungenauer wird. Die Einsatzdauer eines Satelliten wird daher aus Sicherheitsgründen oft bereits beendet, bevor tatsächlich sämtlicher Treibstoff aufgebraucht ist.
Die Bestimmung der Treibstoffmenge in Treibstofftanks mit Hilfe radiometrischer Hilfsmittel ist bereits gemäß US 3 717 760 A, US 3 501 632 A und US 4 755 677 A bekannt. Daneben ist aus der US 4 471 223 A, der DE 10 2008 011 382 A1 und der DE 699 07 659 T2 sowie abermals aus der US 3 501 632 A eine Anordnung der eingangs genannten Art mit längs der Behälterwandung verlaufenden Szintillationsfaserbündeln zur Füllstandsmessung bekannt geworden. Schließlich beschreiben die US 2012/0020457 A1, die US 4 471 223 A sowie auch die bereits genannte DE 10 2008 011 382 A jeweils Anordnungen eines Gammastrahlungsemitters im Zentrum eines Tanks sowie die US 3 531 638 A den umgekehrten Fall eines Detektors im Zentrum eines solchen Tanks. Aufgabe der Erfindung ist es, einen Treibstofftank der eingangs genannten Art so auszubilden, dass auf möglichst einfache Art zu jeder Zeit eine genaue Erfassung der im Tank enthaltenen Treibstoffmenge möglich ist.

Die Erfindung löst diese Aufgabe dadurch, dass der Treibstofftank mit szintillierenden Glasfasern umwickelt und im Zentrum des Treibstofftanks ein Gammastrahlungs-Emitter angeordnet ist und dass den Glasfasern Photodioden zugeordnet sind. Dabei werden mehr als eine Faser verwendet und der Tank in zylindersymmetrischen Abschnitten umwickelt. Dadurch ist eine tomographische Information darüber möglich, wo sich der Treibstoff befindet.

Bei der bevorzugten Ausführungsform der Erfindung läuft die Wickelachse der szintillierenden Glasfasern durch den Tankauslass, damit erkannt werden kann, ob sich noch Treibstoff im Bereich dieses Auslasses befindet. Der restliche Treibstoff kann dann über einen Schubimpuls, der auf den Satelliten in Gegenrichtung des Treibstoffauslasses einwirkt, zum Auslass hin beschleunigt werden.

Darüber hinaus ist es im Rahmen der Erfindung von besonderem Vorteil, wenn der Treibstofftank aus einem Leichtmetall, wie Aluminium oder Titan, gefertigt ist, da die Absorption in der Tankwand und damit die Auslegung der Aktivität möglichst gering gehalten wird.

Allerdings ist eine radiometrische Messung, wie sie bei dem erfindungsgemäßen Treibstofftank vorgesehen ist, auch mit einigen Nachteilen verbunden, die bei der Umsetzung gegenüber dem Nutzen abzuwägen sind:
- So muss an Bord des Satelliten eine radioaktive Quelle mitgeführt werden, was jedoch technisch und aus Gründen des Umweltschutzes kein Problem darstellt, da zu diesem Zweck nur eine geringe Menge von etwa einem Milligramm eines radioaktiven Materials erforderlich ist.
- Die Ausstattung des Treibstofftanks nach der Erfindung mit Fasern, Detektoren und einer Auswerteelektronik erfordert eine zusätzliche Masse von etwa einem Kilogramm, so dass der Satellit bei gleicher Masse nur eine entsprechend verminderte Menge an Treibstoff mitführen kann.
- Es ist eine "Blindprobe" erforderlich, um den radioaktiven Untergrund abzuziehen. Dieser Untergrund kann in bestimmten Orbits aufgrund des van-Allen-Gürtels signifikant und abhängig von der Sonnenaktivität sein. Die Aktivität der Quelle muß auf diesen Untergrund abgestimmt werden.
- Die Dosisbelastung der Elektronik auf dem Satelliten ist aufgrund der mitgeführten radioaktiven Quelle leicht erhöht, was aber nicht signifikant ist.

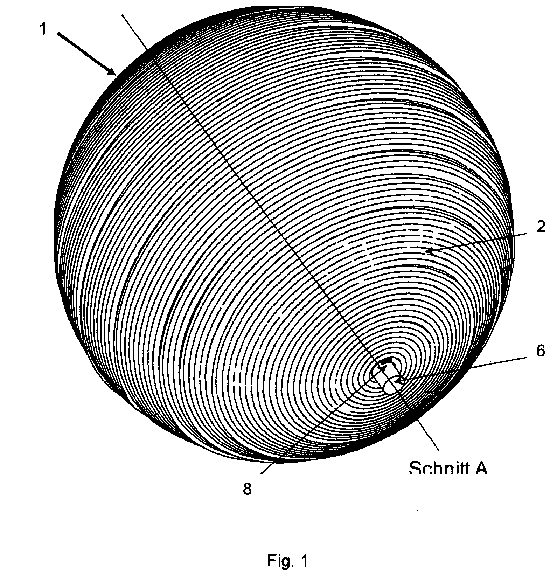

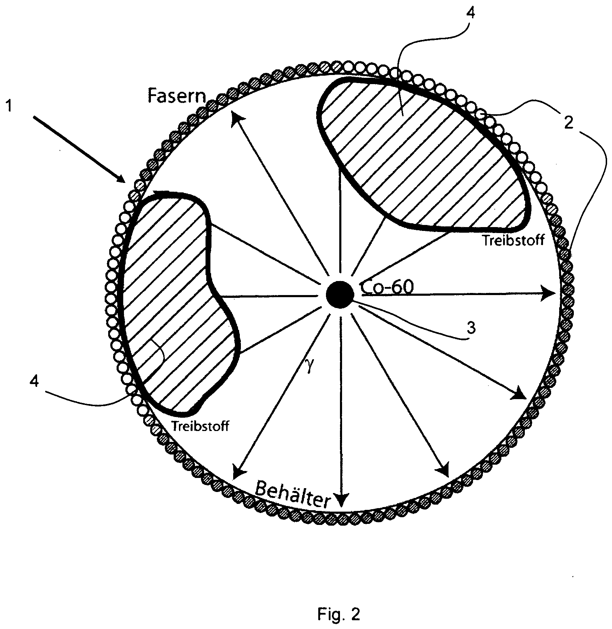

Der wichtigste Vorteil der Erfindung liegt darin, daß aufgrund der besseren Treibstoffausnutzung ein mit einem erfindungsgemäßen Treibstofftank ausgerüsteter Satellit wesentlich länger betrieben werden kann, da jederzeit eine exakte Kenntnis über die noch vorhandene Restmenge an Treibstoff gegeben ist und daraus eine bessere Treibstoffausnutzung, eine verlängerte Einsatzdauer und damit eine signifikante Kostenersparnis resultiert.
Die Technik szintillierender Fasern ist, für sich genommen, bereits seit Jahren bekannt und erprobt. Sogenannte Avalanche-Photodioden sind ebenfalls bereits bekannt und lösen zunehmend die größeren und sperrigeren Vakuum-Photovervielfacher ab.
Nachfolgend soll die Erfindung anhand eines in der Zeichnung dargestellten Ausführungsbeispiels näher erläutert werden. Es zeigen:
Fig. 1 eine perspektivische Darstellung eines kugelförmigen, mit Szintillatorfasern umwickelten Treibstofftanks für Satelliten;
Fig. 2 einen vertikalen Schnitt durch den Treibstofftank gemäß Fig. 1 und
Fig. 3 einen vertikalen Schnitt durch einen zweiten Treibstofftank mit gruppenweise angeordneten Fasern gemäß der Erfindung.
Gemäß der Darstellung in Fig. 1 ist ein Treibstofftank 1 mit szintillierenden Glasfasern 2 umwickelt. Im Zentrum des im Fall des hier beschriebenen Beispiels kugelförmigen Treibstofftanks 1 ist, wie aus der Schnittdarstellung in Fig. 2 hervorgeht, ein Gammastrahlungs-Emitter 3, in diesem Fall eine Kobalt-60-Quelle, platziert. Die szintillierenden Glasfasern 2 senden Lichtimpulse aus, wenn sie von Gamma-Quanten getroffen werden. Diese werden in Photodetektoren, im Fall des hier beschriebenen Beispiels in solchen vom sogenannten Typ "Silizium-Avalanche", ausgekoppelt und in einer entsprechenden, in den Figuren nicht dargestellten Vorverstärker-Elektronik in elektrische Impulse umgesetzt. Einer dieser Avalanche-Photodetektoren 8 ist in der Anordnung gemäß Fig. 1 im Bereich eines Auslasses 6 des Treibstofftanks 1 angeordnet.
Dabei senden diejenigen Fasern, bei denen sich kein Treibstoff 4 zwischen der Quelle 3 und der Faser 2 befindet, starke Leuchtsignale aus (in der Figur dick schraffiert), während diejenigen Fasern, bei denen der Treibstoff die Gammastrahlung absorbiert, schwächere bzw. gar keine Signale aussenden (in der Figur schwach bzw. nicht schraffiert).
Die zeitliche Rate der elektrischen Impulse ist dabei von den folgenden Messgrößen abhängig:
- Der Aktivität und der Masse der Gamma-Quelle 3. Diese Aktivität nimmt über die Zeit exponentiell ab; dies bedeutet, dass die Halbwertzeit der Quelle an die Missionsdauer angepasst wird, was bei Co-60-Quelle mit einer Halbwertzeit von ca. 5 Jahren gegeben ist.
- Der Untergrundstrahlung der Umgebung; weshalb eine Blindprobe zur Subtraktion dieser Untergrundstrahlung verwendet wird.
- Der Absorption durch das zwischen der Quelle 3 und dem jeweiligen Detektor 2 befindliche Material, in diesem Fall dem Treibstoff 4. Somit ist die ermittelte Zählrate direkt davon abhängig davon, wieviel Treibstoff 4 sich noch im Tank 1 befindet.

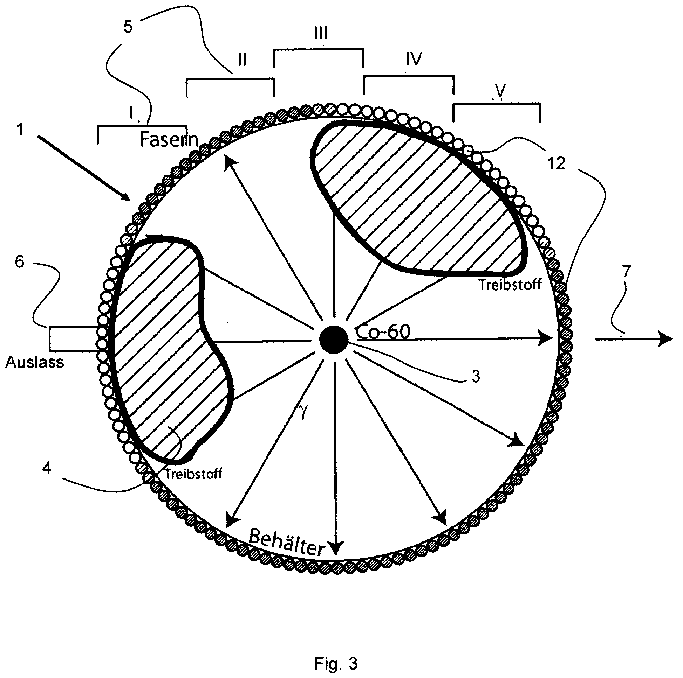

Bei der in Fig. 3 im Schnitt dargestellten Ausführungsform gemäß der Erfindung werden bei einem Treibstofftank 11 mehr als eine Faser verwendet, wobei der Treibstofftank 11 im Fall des in dieser Figur dargestellten Ausführungsbeispiel gemäß der Erfindung in zylindersymmetrischen Abschnitten 15 mit Fasern 12 umwickelt ist. Dadurch wird eine tomographische Information darüber möglich, in welchem Bereich des Treibstofftanks 11 sich der Treibstoff 4 befindet. Ferner verläuft bei der in dieser Figur dargestellten Ausführungsform die Wickelachse der Fasern 12 durch den Tankauslass 6. Auf diese Weise kann erkannt werden, ob sich noch Treibstoff 4 am Auslass 6 befindet, und der restliche Treibstoff 4 kann über einen in Gegenrichtung des Treibstoffauslasses verlaufenden Schubimpuls, in Fig. 3 durch einen Pfeil 7 angedeutet, des Satelliten in Richtung auf diesen Auslass 6 hin beschleunigt werden. Die Gruppe I detektiert dabei, ob sich Treibstoff am Auslass 6 befindet, während die restlichen Gruppen II bis V im Treibstofftank 11 befindliche Treibstoffreste detektieren. Die Position dieser Treibstoffreste kann dabei zur Dosierung des sogenannten "Fuel Settling" Impulses 7 verwendet werden.

Die Treibstofftanks 1 bzw. 11 sind im Fall der hier beschriebenen Ausführungsbeispiele aus einem Leichtmetall, insbesondere aus Aluminium oder Titan, gefertigt, da bei diesen Werkstoffen die Absorption in der Tankwand und damit die Auslegung der Aktivität möglichst gering gehalten wird.

## Patentansprüche

1. Treibstofftank, insbesondere für Satelliten, zur Aufnahme von Treibstoffen mit einer flüssigen Phase, wobei zur Bestimmung der Treibstoffmenge im Inneren des Treibstofftanks mit Hilfe radiometrischer Hilfsmittel der Treibstofftank von Detektoren umgeben ist und im Zentrum des Treibstofftanks ein Gammastrahlungsemitter angeordnet ist, **dadurch gekennzeichnet, dass** der Treibstofftank (1) mit mehr als einen szintillierenden Glasfasern (12) in zylindersymmetrischen Abschnitten (5) umwickelt ist und dass den Glasfasern (12) Photosensoren (8) zugeordnet sind.

2. Treibstofftank nach Anspruch 1, **dadurch gekennzeichnet, dass** der Gammastrahlungs-Emitter (3) aus einer Kobalt-60-Quelle besteht.

3. Treibstofftank nach Anspruch 1 oder 2, **dadurch gekennzeichnet, dass** der Treibstofftank (1) kugelförmig ausgebildet ist.

4. Treibstofftank nach einem der Ansprüche 1 bis 3, **dadurch gekennzeichnet, dass** die Wickelachse der Fasern (2, 12) durch einen Tankauslass (6) verläuft.

5. Treibstofftank nach einem der Ansprüche 1 bis 4, **dadurch gekennzeichnet, dass** der Treibstofftank (1, 11) aus einem Leichtmetall gefertigt ist.

6. Treibstofftank nach Anspruch 5 **dadurch gekennzeichnet, dass** der Treibstofftank (1, 11) aus Aluminium besteht.

7. Treibstofftank nach Anspruch 5 **dadurch gekennzeichnet, dass** der Treibstofftank (1, 11) aus Titan besteht.

8. Treibstofftank nach einem der Ansprüche 1 bis 7, **dadurch gekennzeichnet, dass** die Photosensoren (8) aus Avalanche-Photodioden bestehen.

## Claims

1. Fuel tank, more particularly for satellites, for receiving fuels with a liquid phase, wherein for determining the quantity of fuel in the interior of the fuel tank by way of radiometric means the fuel tank is surrounded by detectors and a gamma radiation emitter is arranged in the centre of the fuel tank, **characterised in that** the fuel tank (1) is wound with more than one scintillating glass fibre (12) in cylindrically symmetrical sections (5) and **in that** photo-sensors (8) are assigned to the glass fibres (12) .

2. Fuel tank according to claim 1 **characterised in that** the gamma radiation emitter (3) consists of a cobalt-60 source.

3. Fuel tank according to claim 1 or 2 **characterised in that** the fuel tank (1) is spherical in design.

4. Fuel tank according to any one of claims 1 to 3 **characterised in** the winding axis of the fibres (2, 12) runs through a tank outlet (6).

5. Fuel tank according to any one of claims 1 to 4 **characterised in that** the fuel tank (11) is made of a lightweight metal.

6. Fuel tank according to claim 5 **characterised in that** the fuel tank (1, 11) is made of aluminium.

7. Fuel tank according to claim 5 **characterised in that** the fuel tank (1, 11) is made of titanium.

8. Fuel tank according to any one of claims 1 to 7 **characterised in that** the photo-sensors (8) consist of Avalanche photodiodes.

## Revendications

1. Réservoir à carburant, en particulier pour satellites, destiné à contenir des carburants à phase liquide, dans lequel, pour déterminer la quantité de carburant à l'intérieur du réservoir à carburant à l'aide de moyens auxiliaires radiométriques, le réservoir à carburant est entouré de détecteurs et un émetteur de rayons gamma est disposé au centre du réservoir de carburant, **caractérisé en ce que** le réservoir à carburant (1) est enveloppé de plus d'une fibre de verre (12) scintillante dans des sections symétriquement cylindriques (5) et que des photodétecteurs (8) sont associés aux fibres de verre (12) .

2. Réservoir à carburant selon la revendication 1, **caractérisé en ce que** l'émetteur de rayons gamma (3) consiste en une source de cobalt 60.

3. Réservoir à carburant selon la revendication 1 ou 2, **caractérisé en ce que** le réservoir à carburant (1) a une conformation sphérique.

4. Réservoir à carburant selon une des revendications 1 à 3, **caractérisé en ce que** l'axe d'enroulement des fibres (2, 12) passe à travers une sortie du réservoir (6) .

5. Réservoir à carburant selon une des revendications 1 à 4, **caractérisé en ce que** le réservoir à carburant (1, 11) est composé de métal léger.

6. Réservoir à carburant selon la revendication 5, **caractérisé en ce que** le réservoir à carburant (1, 11) est composé d'aluminium.

7. Réservoir à carburant selon la revendication 5, **caractérisé en ce que** le réservoir à carburant (1, 11) est composé de titane.

8. Réservoir à carburant selon une des revendications 1 à 7, **caractérisé en ce que** les photodétecteurs (8) sont composés de photodiodes à Avalanche.
